# EUROPEAN PATENT APPLICATION

(11) **EP 0 797 920 A1**
(43) Date of publication of application: **01.10.1997**
(21) Application number: 96104827.9
(22) Date of filing: 27.03.1996
(51) Int. Cl.: A23C 19/045, A23C 19/05, A23C 20/02

(54) **Production of cheese**

(71) Applicant: SOCIETE DES PRODUITS NESTLE S.A., 1800 Vevey (CH)
(72) Inventor: Dalan, Ernesto, 1807 Blonay (CH); Rivier, Vincent, 1033 Cheseaux (CH); Tolstoguzov, Vladimir Borisovich, 1009 Pully (CH)
(74) Representative: Pate, Frederick George

(57) **Abstract**

A process for the production of cheese which comprises contacting a protein material suitable for cheese production with a polysaccharide in an aqueous medium to produce a mixture forming two phases, one of which is a concentrated, heavier, lower phase comprising the proteins and the other of which is a diluted lighter upper phase relatively rich in polysaccharide, separating the lower phase comprising the proteins and incubating it to obtain a cheese product.

## Description

The present invention relates to a process for the production of cheese, particularly to a more rapid process for the production of cheese.

As is well known, the standard methods of producing cheese, are batch processes which include steps such as aging and ripening, take several months and it would be very desirable to reduce the production time.

In Food Hydrocolloids Vol. 2 No. 3 pp. 195-207, 1988, there is described a method of purifying and concentrating protein solutions, a method called membraneless osmosis.

The basic idea underlying the membraneless osmosis involves two physico-chemical phenomena (i) the phase separation in aqueous mixed solutions of biopolymers differing in their chemical composition; and (ii) the difference between the above mentioned biopolymers in their affinity for water. This means that mixtures of protein and polysaccharide solutions can separate into two phases, one which is relatively rich in the protein and another which is relatively rich in the polysaccharide. The difference between the concentrations of macromolecular components in the co-existing phases may be 10-fold or even more. Unlike the osmosis phenomenon, i.e. diffusion transfer of a solvent from the solution through a semi-permeable membrane separating the solvent from the solution, the membraneless osmosis process uses two aqueous solutions of macromolecular substances with different solvent chemical potentials. The function of a membrane in this process is performed by the interface between the two phases. This process is called membraneless osmosis, because it involves the transfer of a solvent, namely water, from one solution to another through the interface between the two phases. In other words, the membraneless osmosis uses two types of phase-forming macromolecular substances. One is a target to be concentrated, while the other, more hydrophilic, is diluted as the former is concentrated. Food proteins are concentrated using polymers suitable for use in foodstuffs. Usually these are polysaccharides.

Generally, membraneless osmosis may be worthwhile, as an industrial-scale process, only if polysaccharides can be recovered more easily and cheaply from the dilute solution than proteins. It is therefore critically important to recycle the polysaccharide - to recover it from the dilute polysaccharide phase and re-use it in the process. It is also possible to make use of dilute polysaccharide solutions for some other purpose, e.g. to produce food products such as various drinks, jellies and whipped products. The use of anionic polysaccharides seems to be most promising, because it is easy to precipitate them from dilute solutions in the form of complexes with proteins at pH values below the protein isoelectric point.

We have found, surprisingly, that by using a process based on membraneless osmosis, it is possible to produce cheese by a much quicker process which takes only a few hours. In addition, the process is cheaper and gives a cheese product in a high yield and in which the fat content and the calcium content may be closely controlled. The process may also be carried out continuously.

According to the present invention there is provided a process for the production of cheese which comprises contacting a protein material suitable for cheese production with a polysaccharide in an aqueous medium to produce a mixture forming two phases, one of which is a concentrated, heavier, lower phase comprising the proteins and the other of which is a diluted lighter upper phase relatively rich in polysaccharide, separating the lower phase comprising the proteins and incubating it to obtain a cheese product.

The process may be carried out batchwise but is preferably a continuous process.

The process may be used to prepare a fresh cheese, e.g. ricotta, in the absence of bacteria. Otherwise a bacteria suitable for cheese making may be incorporated in the mixture.

Advantageously, a lipid suitable for use in cheese production may be incorporated in the mixture, e.g. lipids containing C4-C14 fatty acids such as coconut oil for blue cheese or milk fat for cheddar cheese. The amount of lipid added may be chosen to give the desired properties to the cheese such as flavour and texture. The lipid is encapsulated and coprecipitated with the protein.

The protein material suitable for cheese production may be soya bean, soya protein, skim milk which may be pasteurised, non-skim milk or cream.

The pasteurised skim milk may be obtained by pasteurisation of skim milk by any conventional method. The protein may be used as a suspension, dispersion or solution in water.

The polysaccharide may be neutral, cationic or anionic e.g. pectin such as high methoxy pectin, alginate, arabic gum, locust bean gum, or kappa-, lambda- or iota-carrageenan. The polysaccharide may be microbiological in origin such as xanthan or it may be chemically modified such as methyl cellulose or carboxymethyl cellulose. The polysaccharide may also be used as a solution, suspension or dispersion in water.

The protein material which may be in a dry or dissolved form may be contacted with the polysaccharide which may also be in a dry or dissolved form by adding the components in any order or by mixing all the components together. When a bacteria or lipid is added, it may be added at any stage to the mixture before the two phases are formed.

If desired, one or more alkaline or alkaline earth metals may be added to the mixture to increase the precipitation and gelification of the particles, e.g. Ca, Na or K. The alkaline earth metals are conveniently added in the form of their water-soluble salts, preferably at the beginning of the process.

The concentration of the protein in the protein material may be from 1 to 30% by weight and preferably from 2 to 25% by weight based on the total weight of the protein material. The concentration of the polysaccharide in the aqueous medium may be from 0.01 to 15% by weight and preferably from 0.2 to 7.5% by weight based on the total weight of the aqueous medium.

The temperature at which the protein material is contacted with the polysaccharide may be from 0°C to a temperature above the denaturing temperature of the protein, e.g. from 2°C to 60°C preferably from 10°C to 40°C and especially from 20°C to 35°C.

When a bacteria is added to the mixture, the lower heavier phase comprises the bacteria encapsulated with the proteins.

The mixture of the protein phase (encapsulating bacteria when bacteria are added to the mixture) and the polysaccharide may be separated in the two phases simply by settling or sedimentation, i.e. by standing for a period of a few seconds to a few minutes. However, the mixture is preferably agitated and then centrifuged to separate the two phases. If desired, the mixture may be centrifuged to separate the two phases without previous agitation. The upper light phase rich in polysaccharide may conveniently be removed by decantation.

When the mixture is agitated, this may conveniently be carried out by stirring for a period of time from 1 second to 60 minutes, preferably from 5 to 40 minutes, and more preferably from 5 to 30 minutes.

When the mixture is separated by centrifugation, the duration of the centrifugation may conveniently be from 1 to 60 minutes and preferably from 5 to 30 minutes. The centrifugation may have an acceleration from 100 to 10000 g, preferably from 300 to 5000 g and especially from 500 to 3000g.

The pH is preferably from pH 4 to pH 10 and more preferably from 5.5 to 7.5. When the pH is above the isoelectric point of the particular protein, the salt concentration (as NaCl) may be from 0.01M to 0.03M. When the pH is below the isoelectric point of the particular protein the salt concentration (as NaCl) is above 0.3M up to 0.5M.

The incubation may be carried out at a temperature from 10°C to 55°C, more usually from 15° to 45°C, preferably from 20° to 40° and especially from 25° to 35°C. The pH is preferably from 4 to 7, for instance, from 5 to 6.5. The duration of the incubation may vary from 1 to 72 hours depending on the flavour profile required but usually a desirable cheese product is obtained within 48 hours, e.g. from 3 to 30 hours, preferably from 6 to 24 hours and especially from 8 to 16 hours. The incubation vessel is preferably sterilised before use.

The following Example further illustrates the present invention.

### EXAMPLE 1

A skim milk solution is pasteurised at 85°C for 1 minute. To 600 ml of the pasteurised skim milk is added 200 ml of an aqueous suspension of high methoxy pectin at a concentration of 0.5% by weight, 1% by weight based on the total weight of SD8 Streptococcus lactis diacetyl and 1% by weight based on the total weight of SC15 Streptococcus cremoris. The mixture is stirred gently and then centrifuged at 1000 g for 15 minutes and the lower heavy phase comprising bacteria encapsulated with the milk proteins is separated and incubated at 30°C for 14 hours. After incubation a low fat "fromage frais" is obtained having a firm consistency and a pleasant taste.

## Claims

1. A process for the production of cheese which comprises contacting a protein material suitable for cheese production with a polysaccharide in an aqueous medium to produce a mixture forming two phases, one of which is a concentrated, heavier, lower phase comprising the proteins and the other of which is a diluted lighter upper phase relatively rich in polysaccharide, separating the lower phase comprising the proteins and incubating it to obtain a cheese product.

2. A process according to claim 1 wherein a bacteria suitable for cheese making is incorporated into the mixture.

3. A process according to claim 1 wherein a lipid suitable for use in cheese production is incorporated into the mixture.

4. A process according to claim 1 wherein the protein material is soya bean, soya protein, pasteurised skim milk, non-skim milk or cream.

5. A process according to claim 1 wherein the polysaccharide is high methoxy pectin, an alginate, arabic gum, locust bean gum or kappa-, lambda-, or iota-carrageenan, xanthan, methyl cellulose or carboxymethyl cellulose.

6. A process according to claim 1 wherein either calcium, sodium or potassium is added to the mixture.

7. A process according to claim 1 wherein the two phases are separated by settling or centrifugation.

8. A process according to claim 1 wherein the light upper diluted phase is removed by decantation.

9. A process according to claim 1 wherein the two phases are separated by centrifugation at an acceleration from 100 to 10000 g.

10. A process according to claim 1 wherein the incubation of the phase comprising the bacteria encapsulated with the milk proteins is carried out at a temperature from 10°C to 55°C.

11. A process according to claim 1 wherein the incubation is carried out for a period of from 1 to 72 hours.

12. A cheese product whenever prepared by a process according to any of the preceding claims.
